# EUROPEAN PATENT SPECIFICATION

(11) **EP 1 726 852 B1**
(45) Date of publication and mention of the grant of the patent: **27.07.2011**
(21) Application number: 06008931.5
(22) Date of filing: 28.04.2006
(51) Int. Cl.: F16J 15/06, F16J 15/10

(54) **Coverpan gasket**
Ölwannenabdichtung
Joint pour carter

(30) Priority: 25.05.2005 US 137191
(43) Date of publication of application: 29.11.2006
(73) Proprietor: Carl Freudenberg KG, 69469 Weinheim (DE)
(72) Inventor: Hazel, James A., Manchester NH 03103 (US)

(56) References cited:
- EP-A- 0 708 235
- US-A- 5 673 920
- US-B1- 6 508 471

## Description

### FIELD OF THE INVENTION

The present invention relates to sealing systems according to the first portion of claim 1.

### BACKGROUND OF THE INVENTION

US 5 673 920 A and US 6 508 471 B1 disclose gaskets which engage the threads of fasteners. EP 0 708 235 A1 discloses a gasket reducing sound.

Gaskets are used to form seals between components. Gaskets typically include a compressible material that forms a seal when compressed between the components. A carrier may be disposed within the compressible material to add rigidity to the gasket to help maintain the shape and/or facilitate handling of the gasket. In some applications, such as on coverpans, a torque-limiting feature is included in the gasket. The torque-limiting feature prevents overcompression of the gasket and preloads the fasteners used to hold the components together. Including the torque-limiting feature in the gasket, however, adds to the cost and complexity of the gasket The torque-limiting feature increases the number of steps required to assemble the gasket and the tooling necessary for the same. Furthermore, including the torque-limiting feature can increase the amount of time required to produce each gasket thereby reducing the throughput of the equipment used to make the gaskets with the torque-limiting feature. Thus, it would be advantageous if the torque-limiting feature could be removed from the gasket.

During the assembly of the components to be sealed by the gasket, the gasket is aligned with the components so that fasteners can be inserted through one of the components, through openings in the gasket, and into the other component and secured together. The aligning of the gasket relative to the components during the assembly of the components can be time consuming. Thus, it would be advantageous if the gasket could be preassembled with one of the components and the fasteners. It would be further advantageous if the preassembled component, gasket and fasteners were retained together so that the preassembled component can be shipped from one location to another as an assembly and easily attached to the other component at the final assembly location.

### SUMMARY OF THE INVENTION

In the present invention, a sealing system for forming a seal between two components according to claim 1 is disclosed.

The sealing system includes a plurality of fasteners each having opposite first and second ends with a stem therebetween. The stem has a shoulder portion that operates as a torque limiter. The system includes a gasket attachable to the fasteners. The apertures in the gasket are configured to fit on the shoulder portion of the fasteners and retain the gasket to the fasteners.

A gasket according to the teachings of the present invention facilitates the preassembly of a component, a fastener and the gasket together. The gasket interlocks on the fasteners to retain the fasteners, the gasket and the component together as an assembly. The fastener is utilized to provide the torque-limiting feature thereby freeing the gasket from the necessity of including such a feature therein.

A gasket according to the principles of the present invention includes an inner perimeter, an outer perimeter and opposite first and second sealing surfaces.

A carrier is disposed between the first and second sealing surfaces. A plurality of apertures between the inner and outer perimeters extend through the first and second sealing surfaces. There is at least one projection extending into the apertures.

In yet another aspect of the present invention, a sealing assembly is disclosed. The sealing assembly includes a cover member having a plurality of openings therethrough. A plurality of fasteners are disposed in the cover opening and extend therethrough. A gasket is disposed on the fasteners with the fasteners extending through apertures in the gasket and one of the sealing surfaces facing the cover member. The gasket apertures engage with the fasteners and retain the cover member, the fasteners and the gasket together as an assembly.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
Figure 1 is a perspective view of a sealing system according to the principles of the present invention being used to seal a coverpan to a differential housing;
Figure 2 is a top plan view of a gasket of the sealing system of Figure 1;
Figure 3 is a cross-sectional view of the gasket of Figure 2 along lines 3-3;
Figure 4 is a cross-sectional view of the gasket of Figure 2 along lines 4-4;
Figures 5A and B are alternate configurations for the apertures of the gasket of Figure 2;
Figure 6 is a fragmented partial cross-sectional view of the sealing assembly of Figure 1 sealing the coverpan to the differential housing;
Figure 7A is a cross-sectional view of a first alternate embodiment of the gasket of Figure 2 along lines 4-4;
Figure 7B is a cross-sectional view of a second alternate embodiment of the gasket of Figure 2 along lines 4-4; and
Figure 7C is a cross-sectional view of a third alternate embodiment of the gasket of Figure 2 along lines 4-4.

### DETAILED DESCRIPTION OF THE PREFERRED EMBODIMENT

The following description of the preferred embodiment is merely exemplary in nature and is in no way intended to limit the invention, its application, or uses.

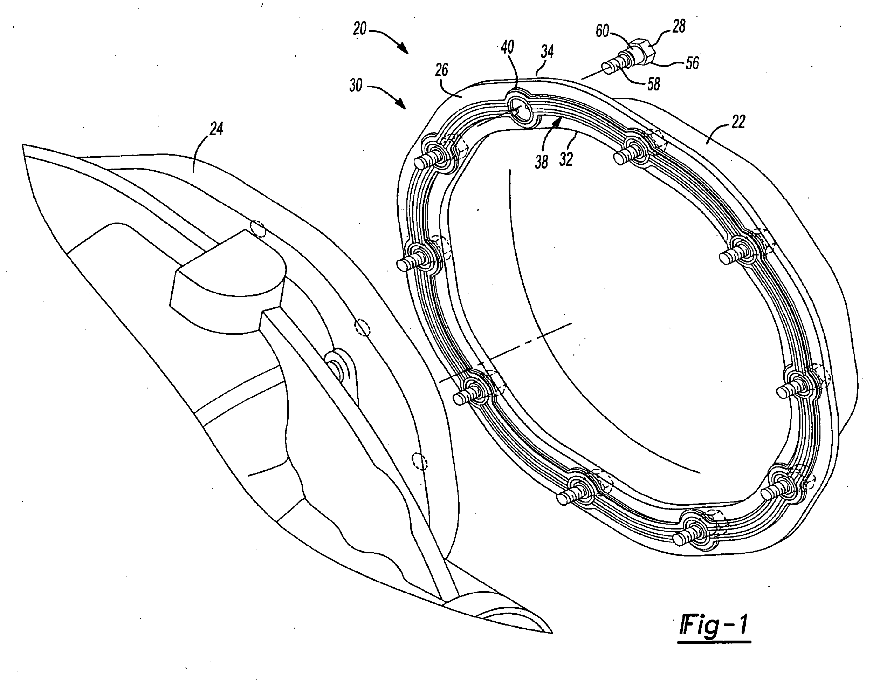

A sealing system 20 according to the principles of the present invention is shown in Figure 1. Sealing system 20 is operable to seal between first and second components 22, 24, such as a coverpan and differential housing, as shown. Sealing system 20 includes a gasket 26, a plurality of fasteners 28 and coverpan 22 which are assembled together to form a sealing assembly 30.

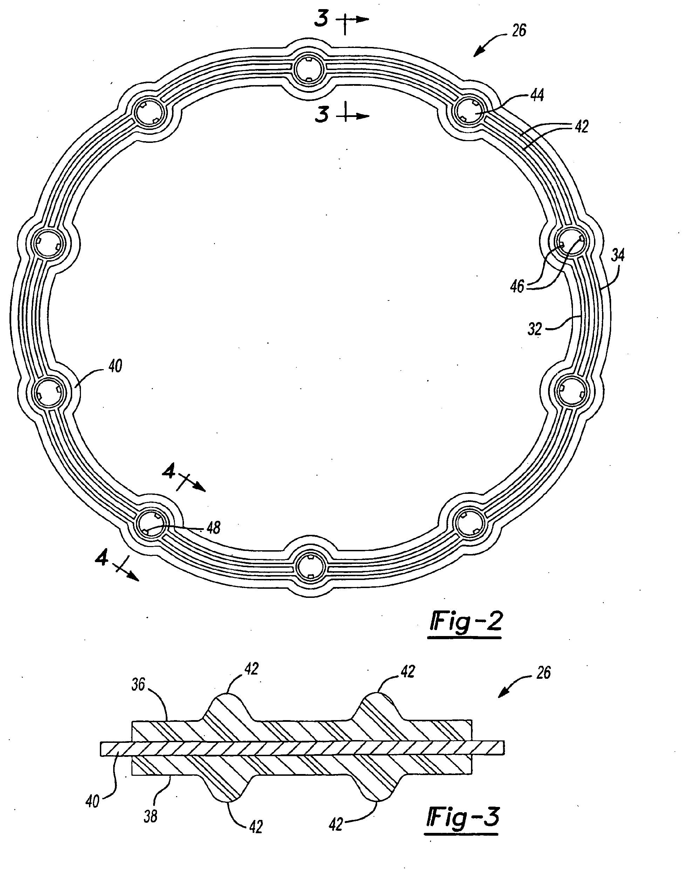

Referring now to Figures 2-4, details of gasket 26 are shown. Gasket 26 has an inner perimeter 32 and an outer perimeter 34. Gasket 26 also has opposite first and second sealing surfaces 36, 38 with a carrier 40 disposed therebetween. First and second sealing surfaces 36, 38 each include a pair of beads or projections 42 that extend axially outwardly therefrom. Sealing surfaces 36, 38 are compressible and form seals against the components that they contact.

Specifically, beads 42 are positioned in a desired location on sealing surfaces 36, 38 to provide a seal at a specific location. The exact location and number of beads can vary for the design of the specific components to be sealed. Sealing surfaces 36, 38 are made from a compressible sealing material, such as rubber, an elastomeric polymer compound, such as polyacrylate, silicon, nitrile and like materials or other compounds including injection moldable rubber compounds. Carrier 40 is relatively rigid and provides rigidity to gasket 26 and facilitates handling and placement of gasket 26. Carrier 40 can be made from a variety of materials. For example, carrier 40 can be made from a steel, such as 1010 or 1008, other metals, or a rigid polymeric material.

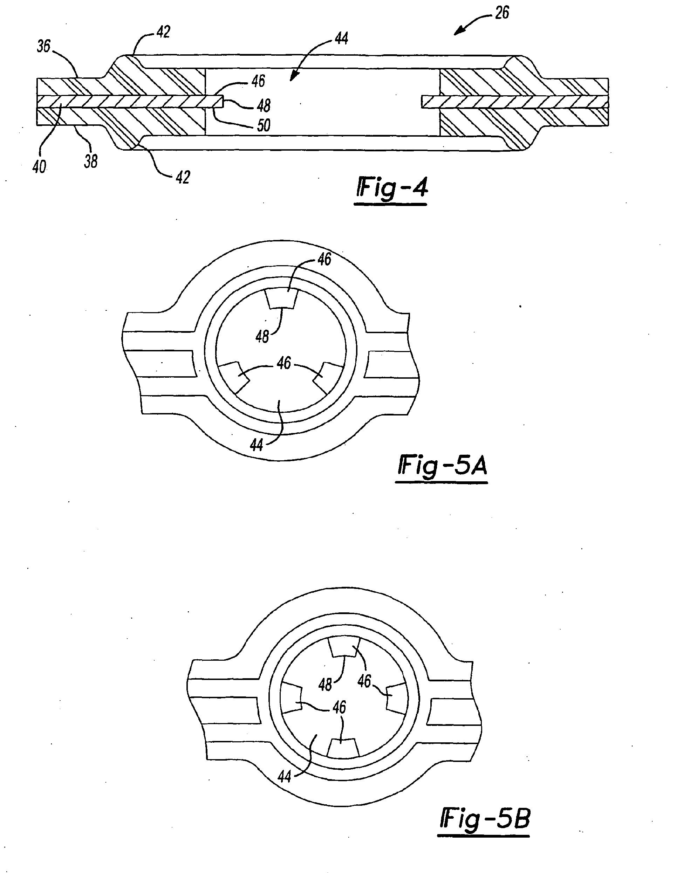

Gasket 26 has a plurality of apertures 44 that extend between first and second sealing surfaces 36, 38 and through carrier 40. Apertures 44 are disposed between the pair of beads 42 on each of first and second sealing surfaces 36, 38. Apertures 44 are dimensioned to allow a shoulder portion of fasteners 28 to fit therethrough. Each aperture 44 has a plurality of projections or tabs 46 extending radially inwardly. Tabs 46 engage with a recessed channel in the shoulder portion of fastener 28 to lock or secure gasket 26 to fastener 28, as described below. The number of tabs 46 may vary. For example, the number of tabs 46 can be two, as shown in Figure 2, or three, as shown in Figure 5A, or four, as shown in Figure 5B. It should be appreciated that the number of tabs 46 can be greater than four. Tabs 46 can have a variety of shapes. Preferably, tabs 46 include a curved tip 48 that facilitates engagement with the channel in the shoulder portion of fasteners 28.

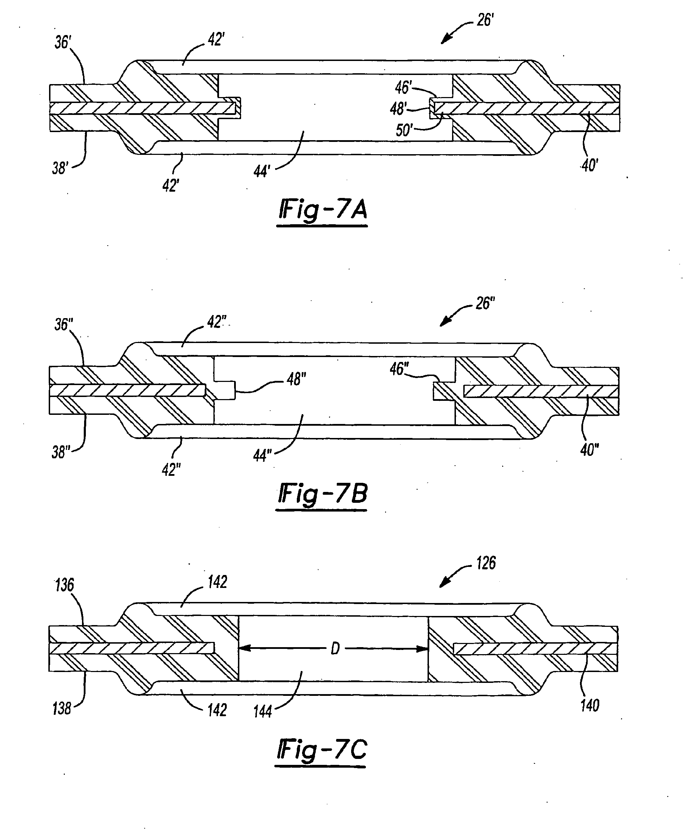

Tabs 46 are preferably formed by portions 50 of carrier 40, as best seen in Figure 4. In a first alternate embodiment, as shown in Figure 7A, portions 50' of carrier 40' that form tabs 46' are covered by the sealing material that forms first and second sealing surfaces 36', 38'. In a second alternate embodiment, as shown in Figure 7B, tabs 46" are formed entirely by the compressible material that forms first and second sealing surfaces 36", 38". The use of the compressible material to entirely form tabs 46" results in less rigid tabs 46" that are more easily deformed when being positioned on a fastener.

Gasket 26 can be formed by a variety of methods. For example, gasket 26 can be formed by overmolding the sealing material around carrier 40. Alternatively, gasket 26 can be formed by injection molding the sealing material over carrier 40. It should be appreciated that other methods of forming gasket 26 can also be employed.

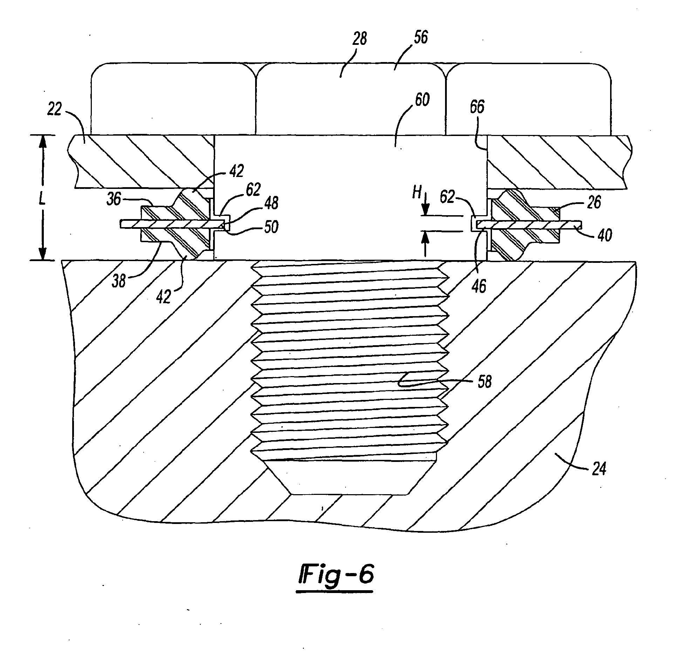

Referring now to Figure 6, details of fasteners 28 and the locking engagement with gasket 26 are shown. Fasteners 28 each have a head portion 56, a threaded portion 58 and a shoulder portion 60 extending therebetween. Head portion 56 is configured to be engaged by a tool, such as a socket or wrench, to facilitate rotation of fastener 28. Threaded portion 58 is configured to engage with a complementary threaded recess in second component 24 to which first component 22 is to be secured. Shoulder portion 60 includes a recessed channel 62 that is dimensioned and positioned on shoulder portion 60 to engage with tabs 46 of gasket 26. Channel 62 has an axial height H that is dimensioned to allow tab 46 to fit therein. Axial height H is larger than the axial thickness of tab 46 and may allow some play between channel 62 and tab 46. Shoulder portion 60 has a diameter greater than the threaded portion 58 and limits the depth to which fastener 28 can be screwed into second component 24. Shoulder portion 60 has an axial length L that is dimensioned to provide a desired compressive force on gasket 26 and prevents overcompression of gasket 26. Shoulder portion 60 functions as a torque-limiting feature of fastener 28 and results in shoulder portion 60 providing a desired level of compression to gasket 26 and a preloading of fastener 28. When gasket 26 is positioned on fasteners 28, tabs 46 extends into channel 62 thereby locking or securing gasket 26 and fastener 28 together.

To form sealing assembly 30, gasket 26 is positioned adjacent first component 22 with one of the sealing surfaces 36, 38 facing first component 22 and apertures 44 in gasket 26 aligned with openings 66 in first component 22. Fasteners 28 are inserted through openings 66 in first component 22 and through apertures 44 in gasket 26. The gasket 26 is held in place as each fastener 28 is inserted through an aperture 44 so that tabs 46 deform along shoulder portion 60 and snap or spring into channel 62. The engagement of tabs 46 in channel 62 secures gasket 26 to fastener 28. This procedure is continued for each fastener 28.

The locking feature between tabs 46 and channels 62 secures fasteners 28, first component 22 and gasket 26 together. The securing of these components together to form sealing assembly 30 facilitates the final assembly of first component 22 to second component 24. Specifically, the ability to form sealing assembly 30 that securely interconnects first component 22, gasket 26 and fasteners 28 together enables the sealing assembly 30 to be made in a remote location and supplied to the final assembly location (to be attached to second component 24) as a single assembly. This ability facilitates the forming of a sealing assembly 30 at a convenient location that may or may not be in the same facility at which the first and second components 22, 24 are sealed together. The interlocking feature between tabs 46 and channels 62 of fasteners 28 inhibits separation of the components during movement and/or transport of sealing assembly 30. Sealing assembly 30 can thereby be provided to the final assembly point wherein a worker or automated machine can position sealing assembly 30 adjacent second component 24 thereby facilitating the assembly of first and second components 22, 24 together. This can result in increased throughput.

In a third alternate embodiment, as shown in Figure 7C, apertures 144 do not have any projections or tabs extending radially therein. Rather, apertures 144 have a diameter D that is dimensioned to provide an interference fit with the shoulder portion of the fastener. Additionally, the shoulder portion of the fastener does not need to have a channel therein as there is no projection or tab on aperture 144. Apertures 144 are formed by the sealing material that forms the first and second sealing surfaces 136, 138. The interference fit between aperture 144 and the shoulder portion of the fastener retains the first component, the fastener and the gasket 126 together to form a sealing assembly. In this embodiment, the assembly is essentially the same as that described above with gasket 126 being held in place as the fasteners are inserted through apertures 144 against the force of the interference fit.

While the present invention has been described with reference to specific examples, dimensions and orientations, it should be appreciated that variations can be employed without departing from the scope of the present invention as defined by the claims. For example, gasket 26 may exclude a carrier 40, although all the benefits and features of the present invention may not be realized. Furthermore, the entirety of carrier 40 may be encapsulated within the sealing material that forms the first and second sealing surfaces 36, 38. Moreover, more than one type of material can be used to form first and second sealing surfaces 36, 38. Additionally, the use of beads or projections 42 may also be eliminated, depending upon the design of the components to be sealed, although all the benefits and features of the present invention may not be realized.

## Claims

1. A sealing system (20) for forming a seal between two components (22, 24), the sealing system (20) comprising:
(a) a plurality of fasteners (28) each having opposite first and second ends with a stem therebetween, the stem having a shoulder portion (60) that operates as a torque limiter; and
(b) a gasket (26) attachable to the fasteners (28), the gasket (26) comprising:
(i) an inner perimeter (32);
(ii) an outer perimeter (34);
(iii) opposite first and second sealing surfaces (36, 38); and
(iv) a plurality of apertures (44) between the inner and outer perimeters (32, 34), the apertures (44) extending through the first and second sealing surfaces (36, 38), and the apertures (44) configured to fit on the shoulder portion (60) of the fasteners (28) and retain the gasket (26) to the fasteners (28), **characterized in that**,
the shoulder portions (60) of the fasteners (28) have a recessed groove (62), at least one projection (46) extends into the gasket apertures (44), and the at least one projection (46) engages with the recessed groove (62) to retain the gasket (26) to the fastener (28).

2. The sealing system of claim 1, wherein the gasket (26) comprises a carrier (40) disposed between said first and second sealing surfaces (36, 38).

3. The sealing system of claim 2, wherein portions (50) of the carrier (40) extend into the apertures (44) and form the at least one projection (46).

4. The sealing system of claim 2 or 3, wherein the first and second sealing surfaces (36, 38) cover the portions (50) of the carrier (40) that form the at least one projection (46).

5. The sealing system of one of the claims 2 to 4, wherein the first and second sealing surfaces (36, 38) comprise a compressible material.

6. The sealing system of claim 2, wherein the first and second sealing surfaces (36, 38) comprise a compressible material and the compressible material extends into the apertures (44) and forms the at least one projection (46).

7. The sealing system of one of the claims 2 to 6, wherein the at least one projection (46) comprises two or more projections (46).

8. The sealing system of one of the claims 2 to 7, wherein the at least one projection (46) is generally frustoconical shaped in plan view.

9. The sealing system of one of the claims 2 to 8, wherein the carrier (40) comprises a metal.

10. The sealing system of one of the claims 2 to 9, wherein a set of at least two spaced apart sealing bumps (42) extend outwardly from each of the sealing surfaces (36, 38) and the apertures (44) are disposed between each set of sealing bumps (42).

11. The sealing system of one of the claims 1 to 10, wherein the apertures (44) have a diameter sized to provide an interference fit with the shoulder portions (60) of the fasteners (28) and the interference fit retains the gasket (26) to the fastener (28).

12. The sealing system of one of the claim 1 to 11, further comprising a cover having a plurality of openings, the cover, the fasteners (28) and the gasket (26) being attached together and forming a preassembly with the fasteners (28) disposed in the cover openings and extending therethrough, the gasket (26) disposed on the fasteners (28) with the gasket apertures (44) engaged with the shoulder portions (60) of the fasteners (28) and the engagement between the fasteners (28) and the gasket (26) holding the preassembly together.

13. A sealing assembly comprising a sealing system according to claim 12, comprising a cover member having a plurality of openings therethrough, a plurality of fasteners (28) disposed in the cover openings and extending therethrough and a gasket (26) having opposite first and second sealing surfaces (36, 38) and a plurality of apertures (44) extending therethrough, the gasket (26) disposed on the fasteners (28) with the fasteners (28) extending through the gasket apertures (44) and one of the sealing surfaces (36, 38) facing the cover member, the gasket apertures (44) engaging with the fasteners (28) and retaining the cover member, the fasteners (28) and the gasket (26) together as an assembly.

14. The sealing assembly of claim 13, wherein the fasteners (28) have opposite first and second ends with a stem therebetween and the stem has a shoulder portion (60) that operates as a torque limiter.

15. The sealing assembly of claim 13 or 14, wherein the gasket apertures (44) are dimensioned to provide an interference fit with the fasteners (28) and the interference fit retains the cover member, the fasteners (28) and the gasket (26) together as an assembly.

## Patentansprüche

1. Dichtungssystem (20) zum Bilden einer Dichtung zwischen zwei Bauteilen (22, 24), wobei das Dichtungssystem (20) Folgendes umfasst:
(a) mehrere Befestigungselemente (28), die jeweils gegenüberliegende erste und zweite Enden mit einem dazwischenliegenden Schaft haben, wobei der Schaft einen Schulterabschnitt (60) hat, der als ein Drehmomentbegrenzer dient; und
(b) eine Dichtung (26), die an den Befestigungselementen (28) angebracht werden kann, wobei die Dichtung (26) Folgendes umfasst:
(i) einen inneren Umfang (32);
(ii) einen äußeren Umfang (34);
(iii) gegenüberliegende erste und zweite Dichtungsflächen (36, 38); und
(iv) mehrere Durchlässe (44) zwischen den inneren und äußeren Umfängen (32, 34), wobei sich die Durchlässe (44) durch die ersten und zweiten Dichtungsflächen (36, 38) erstrecken und die Durchlässe (44) so konfiguriert sind, dass sie auf den Schulterabschnitt (60) der Befestigungselemente (28) passen und die Dichtung (26) an den Befestigungselementen (26) zurückhalten, **dadurch gekennzeichnet, dass**
die Schulterabschnitte (60) der Befestigungselemente (28) eine vertiefte Nut (62) haben, wobei sich mindestens ein Vorsprung (46) in die Dichtungsdurchlässe (44) erstreckt und der mindestens eine Vorsprung (46) in Eingriff mit der vertieften Nut (62) steht, um die Dichtung (26) am Befestigungselement (28) zurückzuhalten.

2. Dichtungssystem nach Anspruch 1, bei dem die Dichtung (26) einen Träger (40) umfasst, der sich zwischen den ersten und zweiten Dichtungsflächen (36, 38) befindet.

3. Dichtungssystem nach Anspruch 2, bei dem sich Abschnitte (50) des Trägers (40) in die Durchlässe (44) erstrecken und den mindestens einen Vorsprung (46) bilden.

4. Dichtungssystem nach Anspruch 2 oder 3, bei dem die ersten und zweiten Dichtungsflächen (36, 38) die Abschnitte (50) des Trägers (40) abdecken, die den mindestens einen Vorsprung (46) bilden.

5. Dichtungssystem nach einem der Ansprüche 2 bis 4, bei dem die ersten und zweiten Dichtungsflächen (36, 38) ein zusammendrückbares Material umfassen.

6. Dichtungssystem nach Anspruch 2, bei dem die ersten und zweiten Dichtungsflächen (36, 38) ein zusammendrückbares Material umfassen und sich das zusammendrückbare Material in die Durchlässe (44) erstreckt und den mindestens einen Vorsprung (46) bildet.

7. Dichtungssystem nach einem der Ansprüche 2 bis 6, bei dem der mindestens eine Vorsprung (46) zwei oder mehr Vorsprünge (46) umfasst.

8. Dichtungssystem nach einem der Ansprüche 2 bis 7, bei dem der mindestens eine Vorsprung (46) im Grundriss allgemein kegelstumpfförmig ausgebildet ist.

9. Dichtungssystem nach einem der Ansprüche 2 bis 8, bei dem der Träger (40) ein Metall umfasst.

10. Dichtungssystem nach einem der Ansprüche 2 bis 9, bei dem sich ein Satz von mindestens zwei beabstandeten Dichtungsverdickungen (42) von jeder der Dichtungsflächen (36, 38) aus nach außen erstreckt und sich die Durchlässe (44) zwischen jedem Satz der Dichtungsverdickungen (42) befinden.

11. Dichtungssystem nach einem der Ansprüche 1 bis 10, bei dem die Durchlässe (44) einen Durchmesser haben, der so dimensioniert ist, dass ein Presssitz mit den Schulterabschnitten (60) der Befestigungselemente (28) bereitgestellt wird und der Presssitz die Dichtung (26) am Befestigungselement (28) zurückhält.

12. Dichtungssystem nach einem der Ansprüche 1 bis 11, das weiterhin eine Abdeckung mit mehreren Öffnungen umfasst, wobei die Abdeckung, die Befestigungselemente (28) und die Dichtung (26) zusammengebaut sind und eine vormontierte Einheit bilden, wobei sich die Befestigungselemente (28) in den Abdeckungsöffnungen befinden und sich durch diese erstrecken, wobei sich die Dichtung (26) auf den Befestigungselementen (28) befindet und die Dichtungsdurchlässe (44) in Eingriff mit den Schulterabschnitten (60) der Befestigungselemente (28) stehen und die vormontierte Einheit durch den Eingriff zwischen den Befestigungselementen (28) und der Dichtung (26) zusammengehalten wird.

13. Dichtungseinheit, die ein Dichtungssystem nach Anspruch 12 umfasst, wobei die Dichtungseinheit ein Abdeckungselement mit mehreren sich **dadurch** erstreckenden Öffnungen, mehrere Befestigungselemente (28), die sich in den Abdeckungsöffnungen befinden und sich durch diese erstrecken, sowie eine Dichtung (26) umfasst, die gegenüberliegende erste und zweite Dichtungsflächen (36, 38) und mehrere sich **dadurch** erstreckende Durchlässe (44) hat, wobei sich die Dichtung (26) auf den Befestigungselementen (28) befindet, sich die Befestigungselemente (28) durch die Dichtungsdurchlässe (44) erstrecken und eine der Dichtungsflächen (36, 38) dem Abdeckungselement zugewandt ist, wobei die Dichtungsdurchlässe (44) in Eingriff mit den Befestigungselementen (28) stehen und das Abdeckungselement, die Befestigungselemente (28) und die Dichtung (26) zusammen als eine Einheit zusammengehalten werden.

14. Dichtungseinheit nach Anspruch 13, bei der die Befestigungselemente (28) gegenüberliegende erste und zweite Enden mit einem dazwischenliegenden Schaft haben und der Schaft einen Schulterabschnitt (60) hat, der als ein Drehmomentbegrenzer dient.

15. Dichtungseinheit nach Anspruch 13 oder 14, bei der die Dichtungsdurchlässe (44) so dimensioniert sind, dass sie einen Presssitz mit den Befestigungselementen (28) bereitstellen und das Abdeckungselement, die Befestigungselemente (28) und die Dichtung (26) durch den Presssitz als eine Einheit zusammengehalten werden.

## Revendications

1. Système (20) d'étanchéité destiné à former un joint entre deux composants (22,24), le système (20) d'étanchéité comportant :
(a) une pluralité d'éléments (28) de fixation présentant chacun des première et deuxième extrémités opposées avec une tige entre celles-ci, la tige comprenant une partie épaulée (60) qui agit comme un limiteur de couple ; et
(b) un joint (26) susceptible d'être lié aux éléments (28) de fixation, le joint (26) comportant :
(i) un périmètre intérieur (32) ;
(ii) un périmètre extérieur (34) ;
(iii) des première et deuxième surfaces (36, 38) d'étanchéité opposées ; et
(iv) une pluralité d'orifices (44) entre les périmètres intérieur et extérieur (32, 34), les orifices (44) s'étendant à travers les première et deuxième surfaces (36, 38) d'étanchéité et les orifices (44) configurées pour s'ajuster sur la partie épaulée (60) des éléments (28) de fixation et retenir le joint (26) sur les éléments (28) de fixation, **caractérisé en ce que**
les parties épaulées (60) des éléments (28) de fixation présentent une gorge (62) en retrait, au moins une protubérance (46) s'étend jusque dans les orifices (44) du joint, et la ou les protubérances (46) interagit avec la gorge (62) en retrait pour retenir le joint (26) sur l'élément (28) de fixation.

2. Système d'étanchéité selon la revendication 1, le joint (26) comportant un support (40) disposé entre lesdites première et deuxième surfaces (36, 38) d'étanchéité.

3. Système d'étanchéité selon la revendication 2, des parties (50) du support (40) s'étendant jusque dans les orifices (44) et formant la ou les protubérances (46).

4. Système d'étanchéité selon la revendication 2 ou 3, les première et deuxième surfaces (36, 38) d'étanchéité recouvrant les parties (50) du support (40) qui forment la ou les protubérances (46).

5. Système d'étanchéité selon l'une des revendications 2 à 4, les première et deuxième surfaces (36, 38) d'étanchéité comportant un matériau compressible.

6. Système d'étanchéité selon la revendication 2, les première et deuxième surfaces (36, 38) d'étanchéité comportant un matériau compressible et le matériau compressible s'étendant jusque dans les orifices (44) et formant la ou les protubérances (46).

7. Système d'étanchéité selon l'une des revendications 2 à 6, la ou les protubérances (46) comportant au moins deux protubérances (46).

8. Système d'étanchéité selon l'une des revendications 2 à 7, la ou les protubérances (46) étant de forme générale tronconique dans une vue en plan.

9. Système d'étanchéité selon l'une des revendications 2 à 8, le support (40) comportant un métal.

10. Système d'étanchéité selon l'une des revendications 2 à 9, un jeu d'au moins deux bourrelets (42) d'étanchéité espacés s'étendant vers l'extérieur à partir de chacune des surfaces (36, 38) d'étanchéité et les orifices (44) étant disposées entre chaque jeu de bourrelets (42) d'étanchéité.

11. Système d'étanchéité selon l'une des revendications 1 à 10, les orifices (44) présentant un diamètre dimensionné en vue d'assurer un ajustement serré avec les parties épaulées (60) des éléments (28) de fixation et l'ajustement serré retenant le joint (26) sur l'élément (28) de fixation.

12. Système d'étanchéité selon l'une des revendications 1 à 11, comportant en outre un couvercle doté d'une pluralité d'ouvertures, le couvercle, les éléments (28) de fixation et le joint (26) étant liés entre eux et formant un ensemble prémontré, les éléments (28) de fixation étant disposés dans les ouvertures du couvercle et s'étendant à travers celles-ci, le joint (26) étant disposé sur les éléments (28) de fixation, les orifices (44) du joint interagissant avec les parties épaulées (60) des éléments (28) de fixation et l'interaction entre les éléments (28) de fixation et le joint (26) maintenant la cohésion de l'ensemble prémonté.

13. A ensemble d'étanchéité comportant un système d'étanchéité selon la revendication 12, comportant un organe de couvercle traversé par une pluralité d'ouvertures, une pluralité d'éléments (28) de fixation disposés dans les ouvertures du couvercle et s'étendant à travers celles-ci et un joint (26) présentant des première et deuxième surfaces (36, 38) d'étanchéité opposées et une pluralité d'orifices (44) s'étendant à travers celles-ci, le joint (26) étant disposé sur les éléments (28) de fixation, les éléments (28) de fixation s'étendant à travers les orifices (44) du joint et l'une des surfaces (36, 38) d'étanchéité faisant face à l'organe de couvercle, les orifices (44) du joint interagissant avec les éléments (28) de fixation et maintenant la cohérence de l'ensemble formé par l'organe de couvercle, les éléments (28) de fixation et le joint (26).

14. Ensemble d'étanchéité selon la revendication 13, les éléments (28) de fixation présentant des première et deuxième extrémités opposées avec une tige entre celles-ci, la tige comprenant une partie épaulée (60) qui agit comme un limiteur de couple.

15. Ensemble d'étanchéité selon la revendication 13 ou 14, les orifices (44) du joint étant dimensionnés en vue d'assurer un ajustement serré avec les éléments (28) de fixation et l'ajustement serré maintenant la cohérence de l'ensemble formé par l'organe de couvercle, les éléments (28) de fixation et le joint (26).
